Europäisches Patentamt

European Patent Office

Office européen des brevets

(19)

(11) **EP 1 247 104 B1**

(12) **FASCICULE DE BREVET EUROPEEN**

(45) Date de publication et mention
de la délivrance du brevet:
**31.08.2005 Bulletin 2005/35**

(21) Numéro de dépôt: **00993443.1**

(22) Date de dépôt: **12.12.2000**

(51) Int Cl.⁷: **G01P 13/02**, G01P 5/14

(86) Numéro de dépôt international:
**PCT/FR2000/003488**

(87) Numéro de publication internationale:
**WO 2001/044820 (21.06.2001 Gazette 2001/25)**

(54) **SONDE MULTIFONCTIONS POUR AERONEF**

MULTIFUNKTIONALE SONDE FüR EIN LUFTFAHRZEUG

MULTIFUNCTIONAL PROBE FOR AN AIRCRAFT

(84) Etats contractants désignés:
**DE FR GB**

(30) Priorité: **17.12.1999 FR 9915996**

(43) Date de publication de la demande:
**09.10.2002 Bulletin 2002/41**

(73) Titulaire: **THALES AVIONICS S.A.**
**78140 Vélizy Villacoublay (FR)**

(72) Inventeurs:
• **COLLOT, Lionel Thomson-CSF Propriété Int.**
**F-94117 Arcueil Cedex (FR)**
• **CHOISNET, Jo[l Thomson-CSF Propriété Int.**
**F-94117 Arcueil Cedex (FR)**

(74) Mandataire: **Collet, Alain**
**THALES Intellectual Property**
**31-33 avenue Aristide Briand**
**94117 Arcueil Cedex (FR)**

(56) Documents cités:
**WO-A-99/61923       FR-A- 2 665 539**
**US-A- 4 672 846**

**Description**

L'invention se rapporte à une sonde multifonctions pour aéronef destinée à déterminer des paramètres aérodynamiques d'un écoulement d'air entourant l'aéronef.

Le pilotage de tout aéronef implique de connaître la vitesse relative à l'aéronef par rapport à l'écoulement d'air l'entourant, c'est-à-dire au vent relatif. Cette vitesse est déterminée à l'aide de capteurs de la pression statique Ps, de la pression totale Pt et de l'angle d'incidence $\alpha$. $\alpha$ fournit la direction du vecteur vitesse dans un système de référence lié à l'aéronef et Pt-Ps fournit le module de ce vecteur. Les trois paramètres aérodynamiques permettent donc de déterminer le vecteur vitesse d'un avion et, accessoirement, d'un aéronef à rotor basculant dit convertible.

L'invention se rapporte plus particulièrement à une sonde comportant une palette mobile destinée à s'orienter dans l'axe de l'écoulement. De façon connue, par exemple du document US-A-4 672 846, la palette mobile comporte plusieurs prises de pression adaptées à la mesure de chaque paramètre. La palette comporte notamment une première prise de pression totale Pt sous la forme d'un orifice s'ouvrant perpendiculairement à l'écoulement. Cet orifice peut être placé à l'extrémité d'un tube dont l'axe est sensiblement parallèle à l'écoulement. Ce tube est mieux connu sous le nom de tube de Pitot.

La palette comporte également une seconde prise de pression statique Ps. Habituellement, cette seconde prise comporte deux orifices situés chacun sur une des faces de la palette. Ces deux orifices sont en communication avec une chambre située à l'intérieur de la palette. La chambre permet de moyenner la pression entre les deux orifices de la seconde prise de pression.

La palette comporte aussi une troisième prise de pression permettant de déterminer l'incidence $\alpha$ de la palette par rapport à l'écoulement d'air ambiant. Cette troisième prise de pression comporte, comme pour la prise de pression statique, deux orifices situés chacun sur une des faces de la palette. Mais à la différence de la prise de pression statique Ps, les deux orifices de la prise de pression d'incidence $\alpha$ ne communiquent pas entre eux et la différence de pression entre les deux orifices permet de déterminer l'incidence $\alpha$ de la palette. Afin d'améliorer la sensibilité de la mesure d'incidence $\alpha$, ces deux orifices sont situés au voisinage du bord d'attaque de la palette.

La palette décrite précédemment comporte une prise de pression pour chaque paramètre à mesurer. Chaque prise de pression comporte un ou plusieurs orifices reliés par des canaux à des capteurs de pression le plus souvent situés dans l'embase de la sonde. Cette embase étant fixe il est nécessaire de prévoir un collecteur pneumatique tournant pour relier chaque orifice situé dans la palette mobile au capteur de pression qui lui est associé dans la partie fixe de la sonde.

L'invention a pour but de simplifier la sonde en réduisant le nombre de prise de pression, le nombre de canaux et par conséquent la constitution du collecteur pneumatique tournant tout en assurant la détermination des trois paramètres aérodynamiques Pt, Ps, et $\alpha$.

Pour atteindre ce but, l'invention a pour objet une sonde multifonctions pour aéronef destinée à déterminer notamment la pression statique et la pression totale d'un écoulement d'air situé au voisinage de l'aéronef et l'incidence de l'aéronef par rapport à l'écoulement, la sonde comportant une palette mobile destinée à s'orienter dans l'axe de l'écoulement d'air, la palette mobile comprenant au moins un orifice de prise de pression statique située sur un côté de la palette et une prise de pression destiné à mesurer l'incidence de la palette par rapport à l'écoulement, caractérisé en ce que la sonde comporte en outre des moyens de mesure de pression associés à chaque prise de pression et des moyens de calcul de la pression totale de l'écoulement en fonction des mesures réalisées par les différents moyens de mesure de la sonde.

Le fait de se passer de prise de pression totale dans la palette conforme à l'invention permet de simplifier d'autres constituants de la sonde comme notamment le circuit de dégivrage nécessaire pour éviter la formation de givre sur la palette lorsque l'aéronef vole en haute altitude et est soumis à des températures nettement inférieures à zéro degrés Celsius. Le givre peut modifier la forme aérodynamique de la palette et obstruer les orifices des prises de pression ce qui entraîne des mesures erronées des paramètres aérodynamiques. Le circuit de dégivrage est couramment réalisé sous la forme d'une résistance électrique chauffant le corps de la palette. Un tube de Pitot utilisé comme une prise de pression totale Pt est relativement volumineux par rapport à l'ensemble de la palette et le circuit de dégivrage qui lui est associé consomme de l'ordre d'un tiers de la puissance électrique nécessaire au dégivrage de l'ensemble de la palette. On voit aisément que le fait de se passer de tube de Pitot permet de simplifier le circuit de dégivrage.

L'invention trouve également son intérêt lorsque le tube de Pitot ou plus généralement la prise de pression totale Pt est réalisé à distance d'une palette ne comportant qu'une prise de pression statique Ps et une prise de pression d'incidence $\alpha$. L'invention permet en conséquence de supprimer le tube de Pitot et l'ouverture correspondante dans la peau de l'aéronef.

L'invention sera mieux comprise et d'autres avantages apparaîtront à la lecture de la description détaillée d'un mode de réalisation de l'invention, description illustrée par le dessin joint dans lequel :

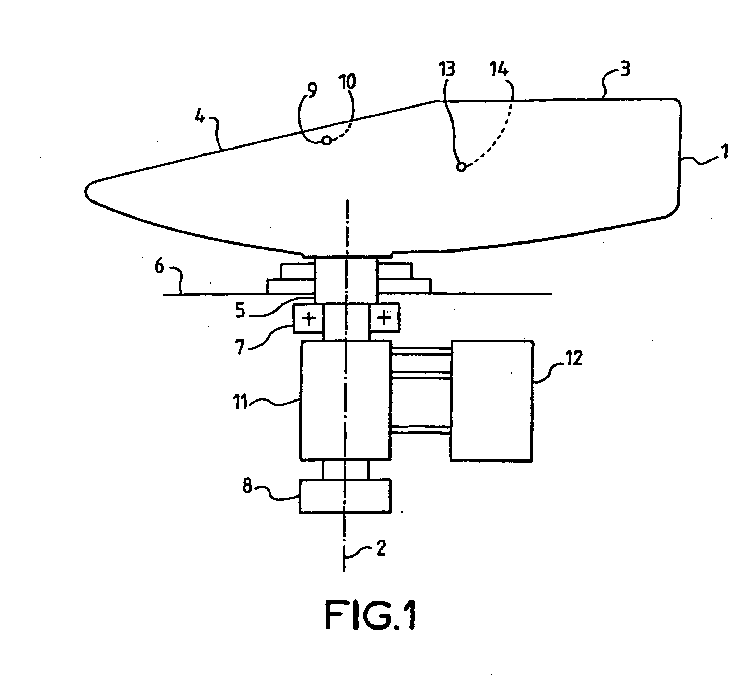

- la figure 1 représente un exemple de réalisation d'une sonde conforme à l'invention.

La sonde multifonctions représentée figure 1 comporte une palette 1 mobile en rotation autour d'un axe 2. La palette 1 comporte une aile 3 possédant un plan de symétrie, parallèle au plan de la figure et séparant l'intrados de l'extrados. Le profil de l'aile 3 perpendiculairement à son bord d'attaque 4 est par exemple du type OOZT du N.A.C.A. Dans l'exemple représenté, le bord d'attaque 4 est sensiblement rectiligne et incliné par rapport à l'axe 2. Il est bien entendu que d'autres formes d'ailes peuvent être utilisées pour mettre en oeuvre l'invention. La palette 1 comporte également un arbre 5 d'axe 2 qui pénètre à l'intérieur de la peau 6 d'un aéronef. L'arbre 5 est mobile en rotation par rapport à l'aéronef, par exemple au moyen d'un palier 7 à roulement. L'arbre 5 est solidaire de moyens de mesure 8 de sa position angulaire autour de l'axe 2. Ces moyens de mesure 8 comportent par exemple un codeur optique d'angle.

Du fait de la forme de l'aile 3, la palette 1 s'oriente naturellement dans l'axe du flux d'air entourant la palette. En conséquence, la mesure de la position angulaire de l'arbre 5 disponible en sortie des moyens de mesure 8 est représentative de l'incidence $\alpha$ de l'aéronef.

Avantageusement, on peut améliorer la fiabilité de la mesure de l'incidence $\alpha$ en asservissant la position angulaire de la palette 1 à une mesure d'un éventuel décalage du plan de symétrie de l'aile 3 par rapport à la direction de l'écoulement d'air entourant la palette 1. Cet asservissement tend à annuler ce décalage. Les avantages et la mise en oeuvre d'un tel asservissement sont mieux décrits dans le brevet français FR 2 665 539 déposé le 3 août 1990 au nom de la Demanderesse.

La mesure du décalage du plan de symétrie de l'aile 3 par rapport à la direction de l'écoulement d'air entourant la palette 1 autrement dit l'incidence de la palette 1 est réalisée au moyen d'une prise de pression d'incidence comportant deux orifices 9 et 10 situés chacun de part et d'autre du plan de symétrie de l'aile 3 au voisinage du bord d'attaque 4.

Sur la figure 1, seul l'orifice 9 est visible. Les deux orifices 9 et 10 sont sensiblement situés à égale distance du bord d'attaque 4 l'un sur l'intrados et l'autre sur l'extrados de l'aile 3. Chaque orifice peut être réalisé dans la pratique, au moyen de plusieurs ouvertures situées sur la face considérée de l'aile 3, les différentes ouvertures d'un même orifice communiquant avec une chambre située à l'intérieur de la palette 1.

A chaque orifice 9 ou 10 ou à chaque chambre, est relié par l'intermédiaire d'un canal non représenté sur la figure 1, un collecteur pneumatique tournant 11. Le collecteur pneumatique tournant 11 délivre à des moyens de traitement 12 la pression d'air relevée au niveau des orifices 9 et 10. Les moyens de traitement 12 comparent les pressions d'air relevées au niveau des orifices 9 et 10. La comparaison est effectuée, par exemple au moyen d'un débitmètre détectant un écart par rapport à un débit d'air nul entre les deux orifices 9 et 10. En règle générale, le débit d'air est sensiblement nul du fait de l'orientation de la palette dans l'axe de l'écoulement d'air qui l'entoure. Mais comme on l'a vu précédemment, afin d'améliorer cette orientation, on peut asservir l'orientation de la palette 1 autour de l'axe 2 de façon à annuler la mesure du débit réalisée par le débitmètre.

La palette comporte en outre, une prise de pression statique Ps comportant deux orifices 13 et 14 situés chacun sur une des faces de l'aile 3 et situés chacun sensiblement symétriquement par rapport au plan de symétrie de l'aile 3. Les orifices 13 et 14 sont sensiblement éloignés du bord d'attaque 4 de l'aile afin d'être moins sensibles aux variations d'incidence de la palette 1. En effet plus les orifices sont proches du bord d'attaque de la palette 1, plus la différence de pression est forte entre les deux orifices pour une incidence donnée. Les deux orifices 13 et 14 sont en communication directe avec une chambre dans laquelle règne la pression moyenne existante au niveau de chaque orifice 13 et 14.

Cette chambre est reliée au collecteur pneumatique tournant 11 par un canal non représenté sur la figure 1.

Le collecteur pneumatique tournant 11 délivre aux moyens de traitement 12 la pression d'air moyenne des orifices 13 et 14.

Avantageusement, il est possible de ne conserver qu'un seul orifice situé sur une des faces de la palette 1. En effet lorsque la palette 1 s'oriente dans l'axe de l'écoulement d'air soit de façon naturelle soit avec l'aide d'un asservissement tel que décrit précédemment les pressions relevées sur les deux faces de la palette 1 symétriquement par rapport au plan de symétrie de la palette 1 sont sensiblement égales et on peut donc se passer d'orifice sur l'une des faces et par conséquent de la chambre reliant les deux orifices situés chacun sur une des faces de la palette 1.

Comme pour la prise de pression d'incidence, l'unique ou les deux orifices de la prise de pression statique peut ou peuvent comporter chacun plusieurs ouvertures situées sur la face considérée de la palette 1, les différentes ouvertures d'un même orifice communiquant avec une chambre située à l'intérieur de la palette 1.

Chaque orifice est caractérisé par un coefficient de pression Kp essentiellement fonction de la forme de la palette, de la position de l'orifice sur la palette et du décalage du plan de symétrie de l'aile 3 par rapport à la direction de l'écoulement d'air entourant la palette 1 décalage autrement appelé désalignement de la palette.

On sait annuler ce désalignement par orientation naturelle de la palette dans l'axe de l'écoulement d'air l'entourant ou mieux encore en utilisant l'asservissement précédemment décrit. En conséquence le coefficient de pression Kpi des orifices 9 et 10 est le même et ne dépend plus du désalignement de la palette 1, il sera noté par la suite Kpi.

De même le coefficient de pression Kps relatif aux orifices 13 et 14 ne dépend pas non plus du désalignement de la palette 1. Pour la prise de pression d'incidence Kpi s'exprime de la façon suivante :

$$Kpi = \frac{Pi - Ps\infty}{Pt - Ps\infty} \tag{1}$$

où Pi représente la pression d'air au niveau des orifices 9 et 10 (on rappelle que la pression d'air au niveau des deux orifices 9 et 10 est sensiblement égale), où Pt représente la pression totale au niveau de la palette 1 et où Ps∞ représente la pression statique à l'infini amont de la palette 1.

De la même façon, pour la prise de pression statique, Kps s'exprime de la façon suivante :

$$Kps = \frac{Ps - Ps\infty}{Pt - Ps\infty} \tag{2}$$

où Ps représente la pression d'air au niveau des orifices 13 et 14.

Les deux coefficients de pression Kpi et Kps dépendent essentiellement des caractéristiques géométriques de la palette 1 (forme de la palette 1 et position des orifices 9, 10, 13 et 14) et sont donc en première approximation constants pour la palette 1 considérée. Il est par exemple possible de les déterminer expérimentalement en soufflerie.

Des équations (1) et (2) on peut déduire que :

$$Ps\infty = \frac{Pi \cdot Kps - Ps \cdot Kpi}{Kps - Kpi} \tag{3}$$

et que

$$Pt = \frac{Pi(1 - Kps) - Ps(1 - Kpi)}{Kpi - Kps} \tag{4}$$

On voit ainsi qu'en mesurant les pressions Ps et Pi, on peut déterminer les pressions Ps∞ et Pt de l'écoulement d'air.

De façon plus précise, le coefficient de pression Kp d'un orifice est également fonction de la vitesse de l'écoulement d'air au voisinage de cet orifice, Kp s'exprime alors de la façon suivante :

$$Kp = 1 - V^2 \tag{5}$$

où V est la vitesse de l'écoulement d'air au niveau de l'orifice considéré pour une vitesse à l'infini amont de la palette 1 égale à l'unité.

Une modélisation des coefficients Kpi et Kps en fonction de la vitesse de l'écoulement est réalisable expérimentalement en soufflerie.

Ainsi pour affiner le calcul de Ps∞ et Pt, on peut tout d'abord calculer ces pressions en fonction des valeurs des coefficients de pression Kps et Kpi, valeurs prises pour une vitesse nulle de l'écoulement d'air. Ensuite on calcule la vitesse de l'écoulement, par exemple en déterminant son nombre de Mach M qui peut s'exprimer de la façon suivante :

$$M = \sqrt{5\left[\left(\frac{Pt}{Ps\infty}\right)^{2/7} - 1\right]} \tag{6}$$

A partir du nombre de Mach M ainsi calculé, on peut recalculer de nouvelles valeurs de Kps et Kpi en fonction de la modélisation qui en a été faite et au moyen des équations (3) et (4) on recalcule les pressions Ps∞ et Pt.

On peut, par itérations successives, calculer la vitesse de l'écoulement d'air par l'équation (6) puis la valeur des coefficients de pression Kps et Kpi à cette vitesse et de nouvelles valeurs de Ps∞ et Pt. On arrête les itérations lorsque la précision sur les valeurs des pressions Ps∞ et Pt est suffisante, c'est-à-dire quand le rapport entre deux résultats de calculs successifs est inférieur à une valeur de consigne prédéfinie. Les valeurs finales de Ps∞ et de Pt, du nombre de Mach M ainsi que l'incidence de la palette 1 permettent de définir la direction et le module du vecteur vitesse de l'aéronef.

On constate que, grâce à l'invention, seules deux mesures de pression suffisent pour déterminer la pression totale Pt et donc le module du vecteur vitesse de l'aéronef. En effet, en utilisant une palette mobile s'orientant dans l'axe de l'écoulement d'air, les coefficients Kpi et Kps ne sont fonction que de la vitesse de l'écoulement et pas de l'orientation de la palette.

**Revendications**

1. Sonde multifonctions pour aéronef destinée à déterminer notamment la pression statique (Ps) et la pression totale (Pt) d'un écoulement d'air situé au voisinage de l'aéronef et l'incidence ($\alpha$) de l'aéronef par rapport à l'écoulement, la sonde comportant une palette mobile (1) destinée à s'orienter dans l'axe de l'écoulement d'air, la palette mobile (1) comprenant au moins un orifice (13, 14) de prise de pression statique située sur un côté de la palette (1) et deux orifices (9, 10) de prise de pression destiné à mesurer l'incidence ($\alpha$) de la palette (1) par rapport à l'écoulement, et des moyens de mesure de pression associés à chaque prise de pression, **caractérisée en ce que** la sonde comporte en outre des moyens de calcul de la pression totale (Pt) de l'écoulement en fonction des mesures réalisées par les différents moyens de mesure de la sonde.

2. Sonde selon la revendication 1, **caractérisée en ce que** la palette mobile (1) comporte deux orifices (13, 14) de prise de pression statique, situés chacun sur une des faces de la palette mobile (1) sensiblement de façon symétrique par rapport à un plan de symétrie de la palette mobile (1).

3. Sonde selon la revendication 1, **caractérisée en ce que** la palette mobile (1) ne comporte qu'un seul orifice de prise de pression statique situé sur une des faces de la palette mobile (1).

4. Sonde selon l'une des revendications précédentes, **caractérisée en ce que** la prise de pression d'incidence comporte deux orifices (9, 10) situés chacun sur une face de la palette mobile (1) sensiblement de façon symétrique par rapport à un plan de symétrie de la palette mobile (1) et situés au voisinage du bord d'attaque (4) de la palette mobile (1).

5. Sonde selon la revendication 4, **caractérisée en ce que** l'orientation de la palette mobile (1) est asservie en rendant sensiblement égales les pressions relevées au niveau des deux orifices (9, 10) de prise de pression d'incidence.

6. Procédé d'utilisation d'une sonde selon l'une des revendications précédentes, **caractérisée en ce qu'**on détermine de façon expérimentale un coefficient de pression (Kps) pour la prise de pression statique et un coefficient de pression (Kpi) pour la prise de pression d'incidence et **en ce qu'**on calcule la pression statique (Ps∞) infini amont et la pression totale (Pt) de l'écoulement d'air en fonction des coefficients de pression (Kps, Kpi) de la pression d'air (Pi) au niveau de la prise de pression d'incidence et de la pression d'air Ps au niveau de la prise de pression statique.

7. Procédé d'utilisation selon la revendication 6, **caractérisé en ce qu'**on détermine de façon expérimentale les coefficients de pression (Kps, Kpi) en fonction de la vitesse de l'écoulement et **en ce qu'**on calcule de façon itérative, une vitesse de l'écoulement (M) à partir des valeurs de la pression statique (Ps∞) et de la pression totale (Pt) calculées précédemment, la valeur des coefficients de pression (Kps, Kpi) à la vitesse de l'écoulement (M), puis de nouvelles valeurs de la pression statique (Ps∞) et de la pression totale (Pt), **en ce qu'**on arrête les itérations lorsque la précision sur les valeurs de la pression statique (Ps∞) et de la pression totale (Pt) est suffisante.

**Patentansprüche**

1. Multifunktionale Sonde für ein Luftfahrzeug, die dazu bestimmt ist, insbesondere den statischen Druck (Ps) und den Totaldruck (Pt) einer Luftströmung, die sich in der Nähe des Luftfahrzeugs befindet, und den Anstellwinkel ($\alpha$) des Luftfahrzeugs in Bezug auf die Strömung zu bestimmen, wobei die Sonde eine bewegliche Palette (1) umfasst, die dazu bestimmt ist, sich in der Achse der Luftströmung auszurichten, wobei die bewegliche Palette (1) mindestens eine Anschlussöffnung (13, 14) für statischen Druck, die sich auf einer Seite der Palette (1) befindet, und zwei Druckanschlussöffnungen (9, 10), die dazu bestimmt sind, den Anstellwinkel ($\alpha$) der Palette (1) in Bezug auf die Strömung zu messen, und Druckmessmittel umfasst, die mit jedem Druckanschluss verbunden sind, **dadurch gekennzeichnet, dass** die Sonde ferner Mittel zur Berechnung des Totaldrucks (Pt) der Strömung in Abhängigkeit von den durch die verschiedenen Messhilfsmittel der Sonde durchgeführten Messungen umfasst.

2. Sonde nach Anspruch 1, **dadurch gekennzeichnet, dass** die bewegliche Palette (1) zwei Anschlussöffnungen (13, 14) für statischen Druck umfasst, die sich jeweils auf einer der Seiten der beweglichen Palette (1) im Wesentlichen symmetrisch zu einer Symmetrieebene der beweglichen Palette (1) befinden.

3. Sonde nach Anspruch 1, **dadurch gekennzeichnet, dass** die bewegliche Palette (1) nur eine einzige Anschlussöffnung für statischen Druck auf einer der Seiten der beweglichen Palette (1) umfasst.

4. Sonde nach einem der vorhergehenden Ansprüche, **dadurch gekennzeichnet, dass** der Anstelldruckanschluss zwei Öffnungen (9, 10) umfasst, die jeweils auf einer Seite der beweglichen Palette (1) im Wesentlichen symmetrisch zu einer Symmetrieebene der beweglichen Palette (1) und in der Nähe des Angriffsrandes (4) der beweglichen Palette (1) angeordnet sind.

5. Sonde nach Anspruch 4, **dadurch gekennzeichnet, dass** die Ausrichtung der beweglichen Palette (1) gesteuert wird, wobei die im Bereich der beiden Anschlussöffnungen (9, 10) für den Anstelldruck erhobenen Druckwerte im Wesentlichen angeglichen werden.

6. Verfahren zur Verwendung einer Sonde nach einem der vorhergehenden Ansprüche, **dadurch gekennzeichnet, dass** experimentell ein Druckkoeffizient (Kps) für den statischen Druckanschluss und ein Druckkoeffizient (Kpi) für den Anstelldruckanschluss bestimmt wird, und dass der stromaufwärtige unendliche statische Druck (Ps∞) und der Totaldruck (Pt) der Luftströmung in Abhängigkeit von den Druckkoeffizienten (Kps, Kpi) des Luftdrucks (Pi) im Bereich des Anstelldruckanschlusses und des Luftdrucks Ps im Bereich des statischen Druckanschlusses bestimmt werden.

7. Verwendungsverfahren nach Anspruch 6, **dadurch gekennzeichnet, dass** experimentell die Druckkoeffizienten (Kps, Kpi) in Abhängigkeit von der Strömungsgeschwindigkeit bestimmt werden, und dass iterativ eine Strömungsgeschwindigkeit (M) aus den vorher berechneten Werten des statischen Drucks (Ps∞) und des Totaldrucks (pt), der Wert der Druckkoeffizienten (Kps, Kpi) bei der Strömungsgeschwindigkeit (M), dann neue Werte des statischen Drucks (Ps∞) und des Totaldrucks (Pt) berechnet werden, und dass die Iterationen beendet werden, wenn die Genauigkeit hinsichtlich der Werte des statischen Drucks (Ps∞) und des Totaldrucks (Pt) ausreichend ist.

**Claims**

1. Multifunction probe for aircraft intended for determining in particular the static pressure (Ps) and the total pressure (Pt) of an airflow located in the vicinity of the aircraft and the angle of incidence ($\alpha$) of the aircraft with respect to the flow, the probe comprising a movable blade (1) intended to orient itself along the axis of the airflow, the movable blade (1) comprising at least one static pressure tap orifice (13, 14) located on one side of the blade (1) and two pressure tap orifices (9, 10) intended for measuring the angle of incidence ($\alpha$) of the blade (1) with respect to the flow, and pressure measurement means associated with each pressure tap, **characterized in that** the probe furthermore comprises means for calculating the total pressure (Pt) of the flow as a function of the measurements carried out by the various measurement means of the probe.

2. Probe according to Claim 1, **characterized in that** the movable blade (1) comprises two static pressure tap orifices (13, 14), each located on one of the faces of the movable blade (1) in a substantially symmetric manner with respect to a plane of symmetry of the movable blade (1).

3. Probe according to Claim 1, **characterized in that** the movable blade (1) comprises just a single static pressure tap orifice located on one of the faces of the movable blade (1).

4. Probe according to one of the preceding claims, **characterized in that** the angle of incidence pressure tap comprises two orifices (9, 10), each located on one face of the movable blade (1) in a substantially symmetric manner with respect to a plane of symmetry of the movable blade (1) and located in the vicinity of the leading edge (4) of the movable blade (1).

5. Probe according to Claim 4, **characterized in that** the orientation of the movable blade (1) is shared by substantially equalizing the pressures sensed at the level of the two angle of incidence pressure tap orifices (9, 10).

6. Method for using a probe according to one of the preceding claims, **characterized in that** a pressure coefficient (Kps) is determined experimentally for the static pressure tap and a pressure coefficient (Kpi) is determined experimentally for the angle of incidence pressure tap and **in that** the upstream infinity static pressure (Ps∞) and the total pressure (Pt) of the airflow are calculated as a function of the pressure coefficients (Kps, Kpi) of the air pressure (Pi) at the level of the angle of incidence pressure tap and of the air pressure Ps at the level of the static pressure tap.

7. Method of use according to Claim 6, **characterized in that** the pressure coefficients (Kps, Kpi) are determined experimentally as a function of the speed of the flow and **in that** a speed of the flow (M) is calculated iteratively on the basis of the values of the static pressure (Ps∞) and of the total pressure (Pt) which are calculated previously, the value of the pressure coefficients (Kps, Kpi) at the speed of the flow (M), then of new values of the static pressure (Ps∞) and of the total pressure (Pt), **in that** the iterations are stopped when the accuracy in the values of the static pressure (Ps∞) and of the total pressure (Pt) is sufficient.

FIG.1